# EUROPEAN PATENT SPECIFICATION

(11) **EP 4 512 674 B1**
(45) Date of publication and mention of the grant of the patent: **07.10.2026**
(21) Application number: 23193089.2
(22) Date of filing: 24.08.2023
(51) Int. Cl.: B60T 8/17, B60T 8/1755, B62D 13/06

(54) **TRAILER YAW-RATE ESTIMATOR**
ANHÄNGERGIERGESCHWINDIGKEITSSCHÄTZER
ESTIMATEUR DE VITESSE DE LACET DE REMORQUE

(43) Date of publication of application: 26.02.2025
(73) Proprietor: KNORR-BREMSE Systeme für Nutzfahrzeuge GmbH, 80809 München (DE)
(72) Inventor: SZÖLLOSI, Adam, 1119 Budapest (HU); BATAI, Andras, 7623 Pecs (HU); NEMETH, Huba, 1116 Budapest (HU); GYURKÓ, Zoltán, 1047 Budapest (HU); KOMLOS, Tamas, 6448 Csavoly (HU); SZOKOL, Tamas, 1112 Budapest (HU); MERZA, Valér, 2000 Szentendre (HU); ZÖLDHEGYI, Valter, 2049 Diósd (HU); DUDAS, Zsolt, 6728 Szeged (HU)

(56) References cited:
- EP-B1- 2 433 839
- DE-A1- 102020 109 598
- US-A1- 2014 136 052
- US-B2- 10 293 834

## Description

The present invention relates to a trailer yaw-rate estimator and, in particular, to a trailer yaw-rate estimation from trailer wheel speed values.

Although trucks are usually equipped with a yaw-rate sensor, such a sensor is rarely available in conventional trailers. The yaw-rate of a trailer is, however, one of the important state variables for an estimation of the current and future behavior of a trailer or of vehicle combinations. The yaw-rate value can be combined with the yaw-rate of a truck (towing vehicle) that tows the trailer to evaluate reliably the vehicle state and to predict an instable driving situation of the whole vehicle combination.

Moreover, even if the yaw-rate of the trailer is not utilized by the towing vehicle (e.g. for future state estimation), the yaw-rate of the trailer is often a desired input for environmental sensors - not only on the truck, but also on the trailer. For example, the environmental sensors of the truck may utilize signals from the yaw-rate sensor as an input to determine in which direction the trailer is heading. These environmental (perceptional) sensors may be mounted on a trailer and may expect the yaw-rate of the trailer as an input value.

For example, radar sensors as an example of environmental sensors can be mounted on the trailer may use the yaw-rate of the trailer itself as an input to interpret the situation correctly. The exemplary radar sensor may be able, based on the provided yaw-rate and optional other input values, to distinguish detected objects as stationary objects or as moving objects. For example, when the trailer is performing a cornering (yaw-rate is nonzero), an object such as a tree may appear as not moving although the trailer itself moves around the corner. Such situations can correctly be interpreted if the yaw-rate is available to the exemplary radar sensor. Same applies to cameras and other environmental sensors. For example, US 10 293 834 B2 discloses a method for estimation of a trailer wheelbase length. EP 2 433 839 B1 discloses a method for stability control of a trailer. DE 10 2020 109598 A1 discloses a system and a method for monitoring a coupled vehicle.

Since conventional trailers are not able to provide this information itself, they have to rely on yaw-rate values provided by the truck. However, these values may not be accurately enough or may be absent. In either case, there is a demand for an estimator to estimate the yaw-rate of a trailer itself so that there is no need to rely on the yaw-rate obtained from the truck.

At least some of the above-mentioned problems are overcome by an estimator according to claim 1 or a method according to claim 9. The dependent claims refer to further advantageous realizations of the subject matter of the independent claims.

The present invention relates to a trailer yaw-rate estimator, wherein the trailer and a truck represent a vehicle combination with one or more sensors for providing sensor data indicative of a yaw-rate of the trailer. The yaw-rate estimator includes a data processing unit configured to estimate the yaw-rate of the trailer based on the provided sensor data. The sensor data include at least one of the following:
- one or more speed values of wheels of the trailer,
- a steering angle of the truck,
- steering angle of the trailer,
- articulation angle between trailer and truck,
- yaw rate of the truck,
- a speed value of the truck.

The steering angle of the trailer refers to trailers with a steered axel or a dolly (e.g. steered by a drawbar). The speed values of wheels may relate to wheels on a non-steered or non-dolly axles and may be measured on opposite sides of one axle. Optionally, the data processing unit is further configured to base the estimation of the yaw-rate additionally on at least one of the following parameters:
- parameter(s) indicative of an axlebase of the trailer,
- parameter(s) indicative of a wheelbase of the trailer,
- parameter(s) indicative of an axlebase of the truck,
- parameter(s) indicative of a wheelbase of the truck,
- parameter(s) defining position of a coupling point between the trailer and the tuck (e.g. a kingpin bases or distances between kingpin and at least one axles).

At least some of the parameter(s) may be geometric parameter(s) defining the geometry of the trailer and/or truck. The term "indicative" will be used within this invention as representing a functional relationship. For example, data indicative of a yaw-rate relates to all data that influence the yaw-rate (i.e. a change of the data changes the yaw-rata) or parameters indicative of an axlebase may be the value of the axlebase or any other value from which the axlebase can be derived. The parameter(s) may be stored in the estimator or may be retrieved from another trailer or truck components (e.g. a storage or an electronic control unit, ECU).

The one or more sensors include multiple trailer sensors installed on the trailer. Then, the data processing unit is configured to estimate the yaw-rate based only on trailer sensor data provided by the multiple sensors installed on the trailer. The trailer sensor data includes at least one of the following:
- wheel speed values of two trailer wheels mounted on opposite sides of one trailer axle (e.g. a non-steered axle),
- the articulation angle between the trailer and the truck in combination with one of the wheel speed values of the trailer wheels.

The one or more sensors may include multiple truck sensors installed on the truck. Then, optionally, the data processing unit is configured to estimate the yaw-rate based only on truck sensor data provided by the multiple sensors installed on the truck. The truck sensor data may include at least one of the following:
- the wheel speed value of at least one wheel of the truck in combination with the steering angle,
- the wheel speed value of at least one wheel of the truck in combination with the articulation angle between the trailer and the truck,
- the yaw-rate value of the truck,
- a longitudinal speed of the truck in combination with the steering angle and/or with the articulation angle.

The one or more sensors may include at least one truck sensor installed on the truck and at least one trailer sensor installed on the trailer. Then, optionally, the data processing unit is configured to estimate the yaw-rate based on a combination of truck sensor data provided by the at least one truck sensor and of trailer sensor data provided by the at least one trailer sensor. The combination of sensor data may include one or more of the following:
- the steering angle of the truck and one wheel speed value of a wheel of the trailer,
- multiple wheel speed values of at least one wheel of the truck and of at least one wheel of the trailer.

Further embodiments relate to a trailer with a trailer sensor. Optionally, the trailer is configured receive truck sensor data of a truck sensor, wherein the truck is configured to tow the trailer. The trailer includes further:
- a trailer yaw-rate estimator as defined before; and
- an environmental sensor, especially a radar sensor, which includes an input for the yaw-rate provided by the yaw-rate estimator.

The received truck sensor data may be utilized for the estimate itself or for improving an available estimate of the yaw-rate.

The environmental sensor may use the yaw rate for the situational awareness such as the determination of the current moving direction.

Optionally, the trailer is one of the following: a steered trailer, a semitrailer, central axle trailer.

Further embodiments relate to a method for estimating a yaw-rate of a trailer of a vehicle combination. The vehicle combination includes a truck and the trailer and at least one sensor for providing sensor data indicative of a yaw-rate of the trailer. The method includes a step of estimating a yaw-rate of the trailer based on the provided sensor data. The estimation may be performed by a data processing unit of an estimator. The method uses as sensor data at least one of the following:
- one or more wheel speed values of trailer wheels,
- a steering angle of the truck,
- a steering angle of the trailer,
- an articulation angle between trailer and truck,
- at least one parameter defining a trailer axlebase,
- at least one parameter defining a trailer wheelbase,
- at least one parameter defining an axlebase of the truck,
- at least one parameter defining a wheelbase of the truck.

This method or at least some steps thereof may also be implemented in software or in a computer program product. Embodiments of the present invention can, in particular, be implemented by software or software modules installed in an electronic control unit (ECU). Therefore, embodiment relate also to a computer program or a computer-readable storage device having a program code for performing the method when the computer program is executed on a processor (e.g. on the estimator as defined before). Embodiments overcome the problems of trailers by providing an estimator dedicated to be installed on the trailer and by providing a method to estimate a yaw-rate of a vehicle such as a trailer or a truck-semi trailer or a central axle trailer. According to embodiments, existing sensors are utilized to estimate or determined the yaw-rate of a trailer or a semi-trailer. Such available sensors may include wheel speed sensors, steering angle sensors, sensors to detect an articulation angle and other sensors. According to embodiments, there are two distinctive situations for which the yaw-rate is estimated:
(a) input data from the available sensors are coming from the truck as well as from the trailer;
(b) input data (e.g. sensor data) from of utilized sensors originate only from the trailer.

Embodiments refer to both situations.

Some examples of the systems and/or methods will be described in the following by way of examples only, and with respect to the accompanying figures, in which:
- Fig. 1: depicts an embodiment for the trailer yaw-rate estimator according to an embodiment of the present disclosure.
- Fig. 2: illustrates further details realized in additional embodiments.
- Fig. 3: show a schematical flow chart for a method of estimating a trailer yaw-rate according to embodiments.

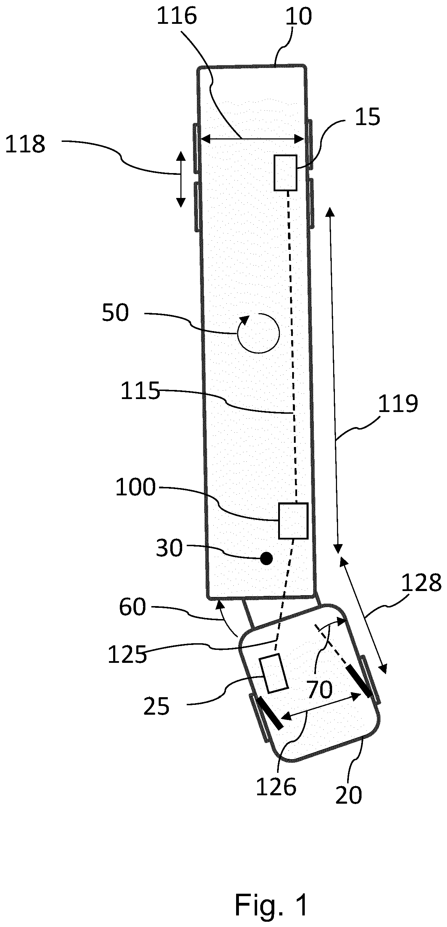

**Fig. 1** depicts an embodiment for the trailer yaw-rate estimator, wherein the trailer 10 is towed by a truck 20 via a coupling 30 (kingpin). The trailer 10 may comprise one or more trailer sensors 15. The truck may comprise one or more truck sensors 25. The trailer sensor(s) 15 and/or the truck sensor(s) 25 provide respective sensor data 115, 125, wherein at least some of them are utilized for the estimation of a yaw-rate 50 of the trailer 10. The estimator 100 includes a data processing unit configured to estimate a yaw-rate 50 of the trailer 10 based on the provided sensor data 115, 125. The provided sensor data 115, 125 include at least one of the following:
- speed values of one or more wheels of the trailer 10,
- a steering angle 70 of the truck 20,
- steering angle of the trailer 10 (e.g. if the trailer is not a semi-trailer),
- an articulation angle 60 between the trailer 10 and the truck 20.

In the present invention, the term "trailer" shall also include semi-trailer and central axle trailer and any other vehicle that can be towed by a towing vehicle. The term "yaw-rate" can be defined as the angular velocity about the vertical axis and thus defines a speed level (rate) of the trailer 10 with which it is turning at a given moment. Apparently, this physical quantity is clearly related to the articulation angle 60 or steering angle 70 in combination with the wheel speeds of the trailer 10. In particular, speed values for wheels on opposite sided of non-steered axles are suitable to determine a turning maneuver or the radius of the curve (e.g. based on the speed differences). In addition, the speed values also allow to determine the lateral speed of the trailer/vehicle, whether or not it performs a motion along a curve or a straight line. It is thus straightforward to determine a rate of directional change and thus the yaw-rate based only on the different wheel speeds.

Therefore, if this data is known, the yaw-rate 50 of the trailer 10 can be calculated or at least estimated. It is understood that not all of the sensor data is needed. Already, some of this sensor data may allow a more or less correct estimate for the yaw-rate 50 which can then be further improved by including further optional sensor data 115, 125.

Furthermore, one or more parameters 116, 118, 119, 126 may be utilized to further improve the estimate, which will be described in the following.

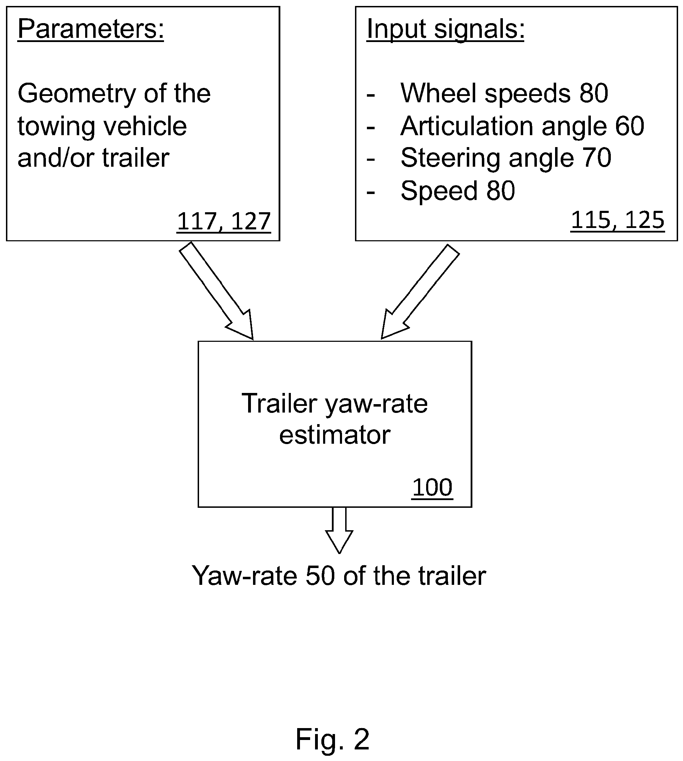

**Fig. 2** illustrates further details being realized in additional embodiments. The input values for the yaw-rate estimator 100 can be distinguished between sensor data 115, 127 on the one hand and, on the other hand, parameters 117, 127 which are available from other sources and define (non-dynamic) characteristics of the particular trailer 10 or of the particular truck 20.

The parameters 117, 127 are one or more (geometric) parameters 117 of trailer and/or one or more (geometric) parameters 127 of the truck. The parameters 117, 127 may include all available geometry data of the truck 20 and/or the trailer 10. For example, the geometric parameters 117 of trailer 10 may include (see Fig. 1): a track width 116, one or more axlebases or wheelbases 118, kingpin base 119 (distance to coupling point between the trailer 10 and truck 20). The geometric parameters 127 of the truck 20 may include: a track width 126, one or more axlebases or wheelbases 128, position of the trailer coupling point 30. Further parameters may be the weight or size (length, width, height) of the trailer and/or the truck, the number of wheels, number of axles.

According to embodiments, the yaw-rate estimator 100 retrieves these parameters from another vehicle component such as a storage or an electronic control unit. Alternatively or additionally, these parameters can be stored locally in the estimator 100. Therefore, the estimator 100 may comprise a data storage to store at least some of these parameters 117, 127. These parameters 117, 127 further improve the estimate. For example, the deviation in the wheel speeds on both sides of the trailer 10 implies apparently a stronger yaw-rate 50 when the track width is smaller and vice versa.

However, the yaw-rate estimator 100 can rely only on sensor data 125 from the truck 20 and sensor data 115 from the trailer 10, wherein less information might be needed from the trailer 10. For example, the truck 20 can provide the steering angle 70 and/or the articulation angle 60 which, in combination, with at least one wheel speed value from the wheel speed sensor 15 on the trailer 10 may be sufficient to determine accurately the yaw-rate 50 acting on the trailer 10.

On the other hand, when only trailer sensor data 115 are available (from the sensors 15 on the trailer 10), multiple sensors 15 might be needed at the trailer 10 to estimate a sufficiently accurate the yaw-rate 50. For example, wheel speed sensors 15 may be available on the left-hand side and right-hand side (or for all wheels). As already mentioned, the yaw-rate 50 can be estimated by processing at least two-wheel speed values, for example on a same (non-steered) axle, because a rate of directional change of the trailer 10 corresponds to different speed values on both sides of the trailer 10. If the left wheels rotate with the same speed as the wheels on the right-hand side, one can assume that the trailer 10 moves along a straight line (zero yaw-rate 50).

For a given curve the yaw-rate 50 depends on the longitudinal speed with which the vehicle moves through the given curve. Therefore, the estimator 100 may further base the estimation on the velocity of the trailer 10. This value can be obtained by an average of the speed values of two wheels on opposite sides. As a result, even if no information is received from the truck 20 (e.g. no available data connection), the estimation of the yaw-rate 50 can still be performed. The trailer 10 may estimate the yaw-rate 50 autonomously.

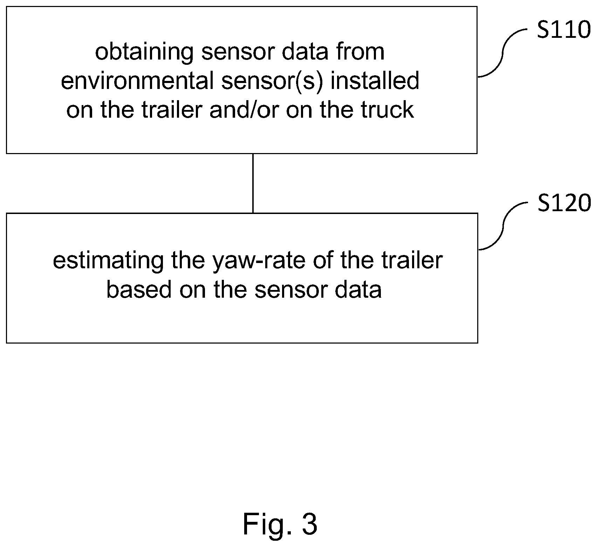

**Fig. 3** depicts a schematic flow diagram of a method for estimating a yaw-rate of a trailer of a vehicle combination with a truck 20 and the trailer 10. The method includes:
- obtaining S110 sensor data 115, 125 from at least one environmental sensor installed on the trailer 10 and/or on the truck 20; and
- estimating S120 the yaw-rate 50 of the trailer 10 based on the sensor data 115, 125.

The sensor data may include any of the above-mentioned quantities. Furthermore, the method may be performed by a data processing unit of an estimator 100 installed on the trailer 10 as described before.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Important aspect of embodiments can be summarized as follows:
- The yaw-rate estimation method for vehicle(s), especially for trailers 10, may use the vehicle dynamic input signals 115 of the trailer 10 and its towing vehicle 20.
- The yaw-rate estimation method for vehicle(s) may utilize a steering angle 70 of the truck 20.
- The yaw-rate estimation method for vehicle(s) may utilize the articulation angle 60 between a trailer 10 and its towing vehicle 20.
- The yaw-rate estimation method for vehicle(s) may utilize the wheel speed(s) of the trailer 10 on non-steered axle(s) (e.g. non dolly axles).
- The yaw-rate estimation method for vehicle(s) may utilize geometric parameters of the truck axle- and kingpin bases plus the trailer axle- and wheelbases.
- The yaw-rate estimation method for vehicle(s) may utilize vehicle dynamic input signals of the specific trailer 10 only.
- The yaw-rate estimation method for vehicle(s) may utilize wheel speed(s) of the trailer 10 on non-steered axle(s) (e.g. non dolly axles).
- The yaw-rate estimation method for vehicle(s) may utilize wheel speed(s) of the trailer on both sides on the same axle.
- The yaw-rate estimation method for vehicle(s) may utilize geometric parameters of the trailer axle- and wheelbases.

The geometry described by the geometric parameter may include not only parameters such as the axle basis and wheel basis of the respective vehicle (towing vehicle or trailer), but also the king pin basis utilized for estimating the yaw-rate plus the trailer axis basis and trailer wheel basis.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the invention herein unless it is stated that a specific combination is not intended.

### LIST OF REFERENCE SIGNS

- 10: trailer (towed vehicle)
- 20: truck (towing vehicle)
- 15: sensor(s) installed on trailer (trailer sensor(s))
- 25: sensor(s) installed on truck (truck sensor(s))
- 30: trailer-truck coupling (kingpin, drawbar)
- 50: yaw-rate
- 60: articulation angle
- 70: steering angle
- 100: yaw-rate estimator
- 115: sensor data of trailer sensor(s)
- 117: (geometric) parameter(s) of trailer
- 118: axle base trailer
- 119: distance between kingpin and trailer axle
- 125: sensor data of truck sensor(s)
- 127: (geometric parameter(s) of truck
- 128: wheelbase
- 116, 126: wheel widths (trailer, truck)

## Claims

1. A trailer yaw-rate estimator (100), wherein the trailer (10) and a truck (20) representing a vehicle combination with one or more sensors (15, 25) for providing sensor data (115, 125) indicative of a yaw-rate (50) of the trailer (10), wherein the one or more sensors (15, 25) include multiple trailer sensors (15) installed on the trailer (10), the trailer yaw-rate estimator (100) comprising:
a data processing unit configured to estimate the yaw-rate (50) of the trailer (10) based on the provided sensor data (115, 125), wherein the sensor data (115, 125) include at least one of the following:
- one or more speed values of wheels of the trailer (10),
- a steering angle (70) of the truck (20),
- steering angle of the trailer (10),
- articulation angle (60) between trailer (10) and truck (20),
- yaw rate of the truck (20),
- a speed value of the truck (20),
**characterized in that**
the data processing unit is configured to estimate the yaw-rate (50) based only on trailer sensor data (115) provided by the multiple sensors (15) installed on the trailer (10) and the trailer sensor data (115) includes at least one of the following:
- wheel speed values of two trailer wheels mounted on opposite sides of one trailer axle,
- the articulation angle (60) between the trailer (10) and the truck (20) in combination with one of the wheel speed values of the trailer wheels.

2. The estimator according to claim 1,
**characterized in that**
the data processing unit is further configured to base or to improve the estimate of the yaw-rate (50) further at least one of the following parameters (117, 127):
- a parameter (117) indicative of an axlebase of the trailer (10),
- a parameter (117) indicative of a wheelbase of the trailer (10),
- a parameter (127) indicative of an axlebase of the truck (20),
- a parameter (127) indicative of a wheelbase of the truck (20),
- a parameter defining position of a coupling point (30) between the trailer (10) and the tuck (20).

3. The estimator according to claim 1 or claim 2, wherein the one or more sensors (15, 25) include multiple truck sensors (25) installed on the truck (20),
**characterized in that**
the data processing unit is configured to estimate the yaw-rate (50) based only on truck sensor data (125) provided by the multiple sensors (25) installed on the truck (20) and the truck sensor data (125) include at least one of the following:
- the yaw-rate value of the truck (20),
- the wheel speed value of at least one wheel of the truck (20) in combination with the steering angle (70),
- the wheel speed value of at least one wheel of the truck (20) in combination with the articulation angle (60) between the trailer (10) and the truck (20),
- a longitudinal speed of the truck (20) in combination with the steering angle (70) or with the articulation angle (60).

4. The estimator according to claim 1 or claim 2, wherein the one or more sensors (15, 25) include at least one truck sensor (25) installed on the truck (20) and at least one trailer sensor (15) installed on the trailer (10),
**characterized in that**
the data processing unit is configured to estimate the yaw-rate (50) based on a combination of truck sensor data (125) provided by the at least one truck sensor (25) and of trailer sensor data (115) provided by the at least one trailer sensor (15), wherein the combination of sensor data includes one or more of the following:
- the steering angle (70) of the truck (20) and one wheel speed value of a wheel of the trailer (10),
- multiple wheel speed values of wheels of the truck (20) and/or of the trailer (10).

5. A trailer (10) with a trailer sensor (15),
**characterized by**
- a trailer yaw-rate estimator (100) according to one of the preceding claims; and
- an environmental sensor, especially a radar sensor, which includes an input for the yaw-rate provided by the yaw-rate estimator (100).

6. The trailer (10) according to claim 5, the trailer (10) being configured to receive truck sensor data (125) of a truck sensor (25), wherein the truck (20) is configured to tow the trailer (10),
**characterized in that**
the yaw-rate estimator (100) is configured to utilize the truck sensor (125) for the estimation of the yaw-rate (50) or for improving an available estimate.

7. The trailer (10) according to claim 5 or claim 6,
**characterized in that**
the trailer is one of the following: a steered trailer, a semitrailer, central axle trailer,

8. A method for estimating a yaw-rate of a trailer (10) of a vehicle combination, wherein the vehicle combination includes a truck (20) and the trailer (10) and a sensor (15, 25) for providing sensor data (115, 125) indicative of a yaw-rate (50) of the trailer (10), wherein the one or more sensors (15, 25) include multiple trailer sensors (15) installed on the trailer (10), the method includes a step of
estimating (S120), by a data processing unit, a yaw-rate of the trailer (10) based on the provided sensor data (115, 125), wherein the sensor data (115, 125) include at least one of the following:
- one or more wheel speed values of trailer wheels,
- a steering angle of the truck (20),
- a steering angle of the trailer (10),
- an articulation angle (60) between the trailer (10) and the truck (20),
- one or more parameters (118, 119) defining a trailer axlebase,
- one or more parameters (118, 119) of a trailer wheelbase,
- one or more parameters (128) of an axlebase of the truck (20),
- one or more parameters (128) of a wheelbase of the truck (20),
**characterized in that**
the estimation, by the data processing unit, of the yaw-rate (50) is based only on trailer sensor data (115) provided by the multiple sensors (15) installed on the trailer (10) and the trailer sensor data (115) includes at least one of the following:
- wheel speed values of two trailer wheels mounted on opposite sides of one trailer axle,
- the articulation angle (60) between the trailer (10) and the truck (20) in combination with one of the wheel speed values of the trailer wheels.

9. Computer-readable storage device having a software code stored thereon designed to operate a data processing unit to estimate a yaw-rate as claimed in claim 8, when the program code is executed on a processor.

## Patentansprüche

1. Anhänger-Giergeschwindigkeitsschätzer (100), wobei der Anhänger (10) und ein LKW (20) eine Fahrzeugkombination mit einem oder mehreren Sensoren (15, 25) zum Bereitstellen von Sensordaten (115, 125) darstellen, die auf eine Giergeschwindigkeit (50) des Anhängers (10) hinweisen, wobei der eine oder die mehreren Sensoren (15, 25) mehrere am Anhänger (10) installierte Anhängersensoren (15) beinhalten, wobei der Anhänger-Giergeschwindigkeitsschätzer (100) umfasst:
eine Datenverarbeitungseinheit, die konfiguriert ist, um die Giergeschwindigkeit (50) des Anhängers (10) basierend auf den bereitgestellten Sensordaten (115, 125) zu schätzen, wobei die Sensordaten (115, 125) mindestens eines von Folgendem beinhalten:
- einen oder mehrere Geschwindigkeitswerte der Räder des Anhängers (10),
- einen Lenkwinkel (70) des LKW (20),
- Lenkwinkel des Anhängers (10),
- Knickwinkel (60) zwischen Anhänger (10) und LKW (20),
- Giergeschwindigkeit des LKW (20),
- einen Geschwindigkeitswert des LKW (20),
**dadurch gekennzeichnet, dass**
die Datenverarbeitungseinheit konfiguriert ist, um die Giergeschwindigkeit (50) nur basierend auf den Anhängersensordaten (115) zu schätzen, die von den mehreren am Anhänger (10) installierten Sensoren (15) bereitgestellt werden, und die Anhängersensordaten (115) mindestens eines von Folgendem beinhalten:
- Radgeschwindigkeitswerte zweier Anhängerräder, die auf gegenüberliegenden Seiten einer Anhängerachse montiert sind,
- den Knickwinkel (60) zwischen dem Anhänger (10) und dem LKW (20) in Kombination mit einem der Radgeschwindigkeitswerte der Anhängerräder.

2. Schätzer nach Anspruch 1,
**dadurch gekennzeichnet, dass**
die Datenverarbeitungseinheit weiter konfiguriert ist, um die Schätzung der Giergeschwindigkeit (50) weiter auf mindestens einem der folgenden Parameter (117, 127) zu basieren oder zu verbessern:
- einem Parameter (117) , der auf einen Achsabstand des Anhängers (10) hinweist,
- einem Parameter (117) , der auf einen Radstand des Anhängers (10) hinweist,
- einem Parameter (127) , der auf einen Achsabstand des LKW (20) hinweist,
- einem Parameter (127) , der auf einen Radstand des LKW (20) hinweist,
- einem Parameter, der eine Position eines Kopplungspunktes (30) zwischen dem Anhänger (10) und dem LKW (20) definiert.

3. Schätzer nach Anspruch 1 oder Anspruch 2, wobei der eine oder die mehreren Sensoren (15, 25) mehrere am LKW (20) installierte LKW-Sensoren (25) beinhalten,
**dadurch gekennzeichnet, dass**
die Datenverarbeitungseinheit konfiguriert ist, um die Giergeschwindigkeit (50) nur basierend auf den LKW-Sensordaten (125) zu schätzen, die von den mehreren am LKW (20) installierten Sensoren (25) bereitgestellt werden, und die LKW-Sensordaten (125) mindestens eines von Folgendem beinhalten:
- den Giergeschwindigkeitswert des LKW (20),
- dem Radgeschwindigkeitswert von mindestens einem Rad des LKW (20) in Kombination mit dem Lenkwinkel (70),
- dem Radgeschwindigkeitswert mindestens eines Rades des LKW (20) in Kombination mit dem Knickwinkel (60) zwischen dem Anhänger (10) und dem LKW (20),
- einer Längsgeschwindigkeit des LKW (20) in Kombination mit dem Lenkwinkel (70) oder mit dem Knickwinkel (60).

4. Schätzer nach Anspruch 1 oder Anspruch 2, wobei der eine oder die mehreren Sensoren (15, 25) mindestens einen am LKW (20) installierten LKW-Sensor (25) und mindestens einen am Anhänger (10) installierten Anhängersensor (15) beinhalten,
**dadurch gekennzeichnet, dass**
die Datenverarbeitungseinheit konfiguriert ist, um die Giergeschwindigkeit (50) basierend auf einer Kombination aus LKW-Sensordaten (125), die von dem mindestens einen LKW-Sensor (25) bereitgestellt werden, und Anhänger-Sensordaten (115), die von dem mindestens einen Anhänger-Sensor (15) bereitgestellt werden, zu schätzen, wobei die Kombination von Sensordaten eines oder mehrere von Folgendem beinhaltet:
- den Lenkwinkel (70) des LKW (20) und einen Radgeschwindigkeitswert eines Rades des Anhängers (10),
- mehrere Radgeschwindigkeitswerte der Räder des LKW (20) und/oder des Anhängers (10).

5. Anhänger (10) mit einem Anhängersensor (15),
**gekennzeichnet durch**
- einen Anhänger-Giergeschwindigkeitsschätzer (100) nach einem der vorstehenden Ansprüche; und
- einen Umgebungssensor, insbesondere einen Radarsensor, der einen Eingang für die Giergeschwindigkeit beinhaltet, der vom Giergeschwindigkeitsschätzer (100) bereitgestellt wird.

6. Anhänger (10) nach Anspruch 5, wobei der Anhänger (10) konfiguriert ist, um LKW-Sensordaten (125) eines LKW-Sensors (25) zu empfangen, wobei der LKW (20) konfiguriert ist, um den Anhänger (10) zu ziehen,
**dadurch gekennzeichnet, dass**
der Giergeschwindigkeitsschätzer (100) konfiguriert ist, um den LKW-Sensor (125) zum Schätzen der Giergeschwindigkeit (50) oder zum Verbessern einer verfügbaren Schätzung zu nutzen.

7. Anhänger (10) nach Anspruch 5 oder Anspruch 6,
**dadurch gekennzeichnet, dass**
der Anhänger einer von Folgenden ist: ein gelenkter Anhänger, ein Sattelanhänger, ein Zentralachsanhänger,

8. Verfahren zum Schätzen der Giergeschwindigkeit eines Anhängers (10) einer Fahrzeugkombination, wobei die Fahrzeugkombination einen LKW (20) und den Anhänger (10) und einen Sensor (15, 25) zum Bereitstellen von Sensordaten (115, 125) beinhaltet, die auf eine Giergeschwindigkeit (50) des Anhängers (10) hinweisen, wobei der eine oder die mehreren Sensoren (15, 25) mehrere am Anhänger (10) installierte Anhängersensoren (15) beinhalten, wobei das Verfahren einen Schritt beinhaltet zum
Schätzen (S120), durch eine Datenverarbeitungseinheit, einer Giergeschwindigkeit des Anhängers (10) basierend auf den bereitgestellten Sensordaten (115, 125), wobei die Sensordaten (115, 125) mindestens eines von Folgendem beinhalten:
- einen oder mehrere Radgeschwindigkeitswerte von Anhängerrädern,
- einen Lenkwinkel des LKW (20),
- einen Lenkwinkel des Anhängers (10),
- einen Knickwinkel (60) zwischen dem Anhänger (10) und dem LKW (20),
- einen oder mehrere Parameter (118, 119), die einen Achsabstand des Anhängers definieren,
- einen oder mehrere Parameter (118, 119) eines Radstands des Anhängers,
- einen oder mehrere Parameter (128) eines Achsabstands des LKW (20),
- einen oder mehrere Parameter (128) des Radstands des LKW (20),
**dadurch gekennzeichnet, dass**
die Schätzung, durch die Datenverarbeitungseinheit, der Giergeschwindigkeit (50) nur auf den Anhängersensordaten (115) basiert, die von den mehreren am Anhänger (10) installierten Sensoren (15) bereitgestellt werden, und die Anhängersensordaten (115) mindestens eines von Folgendem beinhalten:
- Radgeschwindigkeitswerte zweier Anhängerräder, die auf gegenüberliegenden Seiten einer Anhängerachse montiert sind,
- den Knickwinkel (60) zwischen dem Anhänger (10) und dem LKW (20) in Kombination mit einem der Radgeschwindigkeitswerte der Anhängerräder.

9. Computerlesbare Speichervorrichtung, die einen darauf gespeicherten Softwarecode aufweist, der ausgelegt ist, um eine Datenverarbeitungseinheit zu betreiben, um eine Giergeschwindigkeit nach Anspruch 8 zu schätzen, wenn der Programmcode auf einem Prozessor ausgeführt wird.

## Revendications

1. Estimateur de taux de lacet de remorque (100), dans lequel la remorque (10) et un camion (20) constituent un ensemble de véhicules équipé d'un ou plusieurs capteurs (15, 25) fournissant des données de capteurs (115, 125) indicatives du taux de lacet (50) de la remorque (10), dans lequel les un ou plusieurs capteurs (15, 25) incluent plusieurs capteurs de remorque (15) installés sur la remorque (10), l'estimateur de taux de lacet de remorque (100) comprenant :
une unité de traitement de données configurée pour estimer le taux de lacet (50) de la remorque (10) à partir des données de capteur fournies (115, 125), dans lequel les données de capteur (115, 125) incluent au moins l'un des éléments suivants :
- une ou plusieurs valeurs de vitesse des roues de la remorque (10),
- un angle de braquage (70) du camion (20),
- un angle de braquage de la remorque (10),
- un angle d'articulation (60) entre la remorque (10) et le camion (20),
- le taux de lacet du camion (20),
- une valeur de vitesse du camion (20),
**caractérisé en ce que**
l'unité de traitement des données est configurée pour estimer le taux de lacet (50) uniquement à partir des données des capteurs de remorque (115) fournies par les multiples capteurs (15) installés sur la remorque (10) et les données des capteurs de remorque (115) incluent au moins l'un des éléments suivants :
- les valeurs de vitesse de roue de deux roues de remorque montées de part et d'autre d'un essieu de remorque,
- l'angle d'articulation (60) entre la remorque (10) et le camion (20) en combinaison avec l'une des valeurs de vitesse de roue des roues de la remorque.

2. Estimateur selon la revendication 1,
**caractérisé en ce que**
l'unité de traitement des données est en outre configurée pour baser ou améliorer l'estimation du taux de lacet (50) à partir d'au moins un des paramètres suivants (117, 127) :
- un paramètre (117) indicatif d'un entraxe de la remorque (10),
- un paramètre (117) indicatif d'un empattement de la remorque (10),
- un paramètre (127) indicatif d'un entraxe du camion (20),
- un paramètre (127) indicatif d'un empattement du camion (20),
- un paramètre définissant la position d'un point de couplage (30) entre la remorque (10) et le camion (20).

3. Estimateur selon la revendication 1 ou la revendication 2, dans lequel le ou les capteurs (15, 25) incluent plusieurs capteurs de camion (25) installés sur le camion (20),
**caractérisé en ce que**
l'unité de traitement des données est configurée pour estimer le taux de lacet (50) uniquement à partir des données des capteurs du camion (125) fournies par les multiples capteurs (25) installés sur le camion (20) et les données des capteurs du camion (125) incluent au moins l'un des éléments suivants :
- la valeur du taux de lacet du camion (20),
- la valeur de vitesse de roue d'au moins une roue du camion (20) en combinaison avec l'angle de braquage (70),
- la valeur de vitesse de roue d'au moins une roue du camion (20) en combinaison avec l'angle d'articulation (60) entre la remorque (10) et le camion (20),
- une vitesse longitudinale du camion (20) en combinaison avec l'angle de braquage (70) ou avec l'angle d'articulation (60).

4. Estimateur selon la revendication 1 ou la revendication 2, dans lequel le ou les capteurs (15, 25) incluent au moins un capteur de camion (25) installé sur le camion (20) et au moins un capteur de remorque (15) installé sur la remorque (10),
**caractérisé en ce que**
l'unité de traitement des données est configurée pour estimer le taux de lacet (50) sur la base d'une combinaison de données de capteurs de camion (125) fournies par le au moins un capteur de camion (25) et de données de capteurs de remorque (115) fournies par le au moins un capteur de remorque (15), dans lequel la combinaison de données de capteurs inclut un ou plusieurs des éléments suivants :
- l'angle de braquage (70) du camion (20) et la valeur de vitesse d'une roue de la remorque (10),
- les multiples valeurs de vitesse de roue des roues du camion (20) et/ou de la remorque (10).

5. Remorque (10) avec un capteur de remorque (15),
**caractérisée par**
- un estimateur de taux de lacet de remorque (100) selon l'une des revendications précédentes ; et
- un capteur environnemental, en particulier un capteur radar, qui inclut une entrée pour le taux de lacet fourni par l'estimateur de taux de lacet (100).

6. Remorque (10) selon la revendication 5, la remorque (10) étant configurée pour recevoir les données du capteur de camion (125) d'un capteur de camion (25), dans lequel le camion (20) est configuré pour remorquer la remorque (10),
**caractérisé en ce que**
l'estimateur de taux de lacet (100) est configuré pour utiliser le capteur du camion (125) pour l'estimation du taux de lacet (50) ou pour améliorer une estimation disponible.

7. Remorque (10) selon la revendication 5 ou la revendication 6,
**caractérisé en ce que**
la remorque est l'une des suivantes : une remorque directrice, une semi-remorque, une remorque à essieu central,

8. Procédé d'estimation du taux de lacet d'une remorque (10) d'un ensemble routier, dans lequel l'ensemble routier inclut un camion (20) et la remorque (10) et un capteur (15, 25) fournissant des données (115, 125) indicatives du taux de lacet (50) de la remorque (10), dans lequel les un ou plusieurs capteurs (15, 25) incluent de multiples capteurs de remorque (15) installés sur la remorque (10), le procédé inclut une étape de
estimation (S120), par une unité de traitement de données, d'un taux de lacet de la remorque (10) sur la base des données de capteur fournies (115, 125), dans lequel les données de capteur (115, 125) incluent au moins l'un des éléments suivants :
- une ou plusieurs valeurs de vitesse de roue des roues de la remorque,
- un angle de braquage du camion (20),
- un angle de braquage de la remorque (10),
- un angle d'articulation (60) entre la remorque (10) et le camion (20),
- un ou plusieurs paramètres (118, 119) définissant un entraxe de remorque,
- un ou plusieurs paramètres (118, 119) de l'empattement de la remorque,
- un ou plusieurs paramètres (128) d'un entraxe du camion (20),
- un ou plusieurs paramètres (128) d'un empattement du camion (20),
**caractérisé en ce que**
l'estimation, par l'unité de traitement des données, du taux de lacet (50) est basée uniquement sur les données des capteurs de remorque (115) fournies par les multiples capteurs (15) installés sur la remorque (10) et les données des capteurs de remorque (115) incluent au moins l'un des éléments suivants :
- les valeurs de vitesse de roue de deux roues de remorque montées de part et d'autre d'un essieu de remorque,
- l'angle d'articulation (60) entre la remorque (10) et le camion (20) en combinaison avec l'une des valeurs de vitesse de roue des roues de la remorque.

9. Dispositif de stockage lisible par ordinateur comportant un code logiciel conçu pour faire fonctionner une unité de traitement de données afin d'estimer un taux de lacet selon la revendication 8, lorsque le code du programme est exécuté sur un processeur.
